# EUROPÄISCHE PATENTSCHRIFT

(11) **EP 0 932 784 B1**
(45) Veröffentlichungstag und Bekanntmachung des Hinweises auf die Patenterteilung: **24.04.2002**
(21) Anmeldenummer: 97912194.4
(22) Anmeldetag: 16.10.1997
(51) Int. Cl.: F16K 31/02

(54) **PIEZOELEKTRISCH BETÄTIGTES FLUIDVENTIL**
PIEZO-ELECTRICALLY ACTUATED FLUID VALVE
SOUPAPE A FLUIDE A COMMANDE PIEZO-ELECTRIQUE

(30) Priorität: 26.10.1996 DE 19644564
(43) Veröffentlichungstag der Anmeldung: 04.08.1999
(73) Patentinhaber: Continental Teves AG & Co. oHG, 60488 Frankfurt (DE)
(72) Erfinder: PEREZ-CUADRO, Diogenes, D-65830 Kriftel (DE)
(74) Vertreter: Blum, Klaus-Dieter
(86) Internationale Anmeldenummer: EP9705718
(87) Internationale Veröffentlichungsnummer: WO9819086

(56) Entgegenhaltungen:
- WO-A-95/25920
- CH-A- 109 350
- CH-A- 337 046
- DE-A- 4 129 774
- DE-U- 7 045 539

## Beschreibung

Die Erfindung betrifft ein piezoelektrisch betätigtes Fluidventil mit einem Ventilgehäuse, in dem eine Ventilkammer ausgebildet und ein mit einer Spannung beaufschlagbarer piezoelektrischer Biegewandler einseitig eingespannt ist, mit einem ersten und zweiten Verbindungskanal zwischen je einer äußeren Anschlußstelle und einer Mündung in die Ventilkammer, sowie mit einem Ventilsitz an einer der Mündungen und einem damit zusammenwirkenden, vom Biegewandler betätigten Ventilglied.

Ein Fluidventil dieser Art ist aus der PCT-Anmeldung WO95/25920 bekannt. Bei Anlegen einer Spannung wird das Ventilglied relativ zum Ventilsitz verschwenkt, um entweder einen Durchflußquerschnitt freizugeben oder zu verschließen. Die dabei verwendeten piezoelektrisch beeinflußbaren Biegewandler können sehr klein und reaktionsschnell ausgelegt werden, haben aber den Nachteil, daß die realisierbaren Schließkräfte nur sehr klein sind, so daß die erforderliche Dichtigkeit nur bei kleinen Druckdifferenzen erreicht wird. Die Schließ- bzw. Öffnungskräfte sind proportional zur angelegten Spannung und umgekehrt proportional zur Aaslenkung des freien, nicht eingespannten Endes des piezoelektrischen Biegewandlers. Außerdem gibt es materialbedingte Grenzen für die maximal zulässige Steuerspannung, so daß die verlangte Dichtigkeit bei höheren Druckdifferenzen nur mit einer oft nicht tolerierbaren baulichen Vergrößerung des piezoelektrischen Biegwandlers erreicht werden kann. Eine gewisse Verbesserung kann zwar durch geschliffene Dichtflächen oder eine zusätzliche Abstützung des Biegewandlers zwischen Einspannende und freiem Ende erreicht werden, ist aber mit erhöhtem Fertigungsaufwand und einem Verlust an Ventilstellweg verbunden.

Es besteht somit die Aufgabe, ein Fluidventil der eingangs genannten Art so weiterzubilden, daß im Rahmen der zulässigen Steuerspannung und der vorgegebenen Abmessungen des Biegewandlers eine allen Dichtigkeitsforderungen genügende Schließkraft realisiert werden kann.

Diese Aufgabe wird erfindungsgemäß dadurch gelöst, daß das Ventilglied einen Stößel mit Dichtflächen aufweist, dessen hinteres Ende mit dem nicht eingespannten Ende des Biegewandlers verbunden ist und dessen vorderes Ende in einer sich durch die Gehäusewandung und senkrecht zum Ventilsitz erstreckenden Durchgangsbohrung abdichtend geführt ist, wobei die Durchgangsbohrung innerhalb des Dichtungsbereichs eine Teilstrecke eines der Verbindungskanäle bildet und die freie Stirnfläche des Stößels außerhalb des Dichtungsbereichs dem gleichen Fluiddruck ausgesetzt ist, der im anderen Verbindungskanal herrscht.

Der Erfindung liegt die Erwägung zugrunde, den der Schließkraft am Ventilsitz entgegenwirkenden Fluiddruck zu kompensieren, d.h. einen Druckausgleich zu schaffen, so daß die schließ- bzw. Öffnungskräfte am Ventilglied nur noch auf die sich aus der Konstruktion des Ventiles selbst ergebenden Gegenkräfte abgestimmt werden müssen bzw. umgekehrt die konstruktiv erforderlichen Gegenkräfte an die mit piezoelektrischen Biegewandlern erzeugbaren Kräfte anzupassen sind. Zu diesem Zweck ist der Stößel in der Durchgangsbohrung abdichtend geführt und seine Stirnfläche dem gleichen Fluiddruck ausgesetzt, der auf der anderen Seite des Ventilsitzes herrscht. Da diese Stirnfläche den gleichen Durchmesser hat wie der Ventilsitz, heben sich die aus Druckdifferenzen in den Verbindungskanälen herrührende, auf den Stößel einwirkenden Kräfte gegenseitig auf, wodurch die angestrebte Entlastung der Ventildichtung vom Fluiddruck erreicht ist.

Vorteilhafte Weiterbildungen des Erfindungsgedankens sind in den Unteransprüchen 2 bis 10 und 14 beschrieben. In den Ansprüchen 11 und 12 sind spezielle Anwendungsmöglichkeiten genannt und Anspruch 13 bezieht sich auf die Ansteuerung des Fluidventils mittels Gegenspannung.

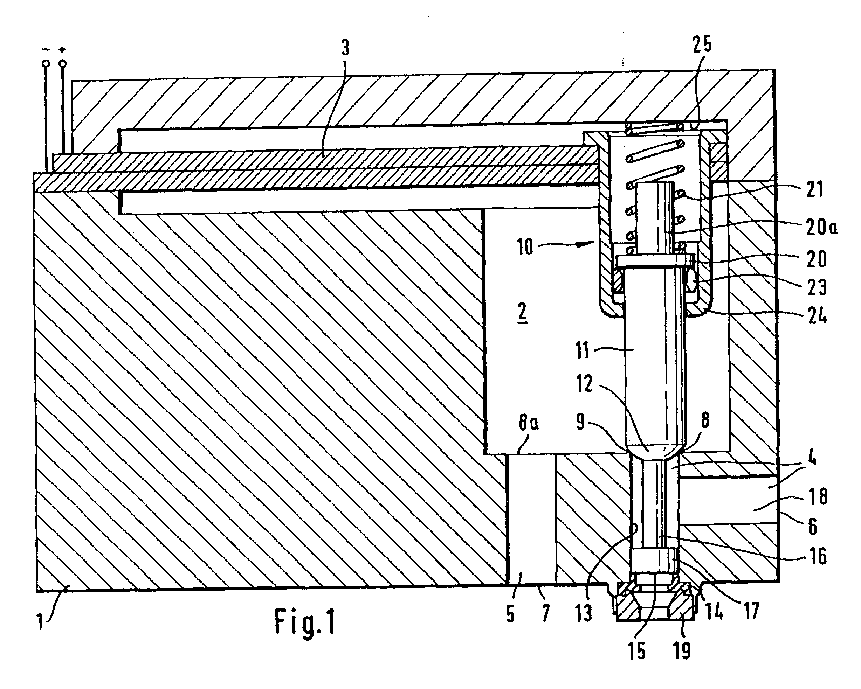

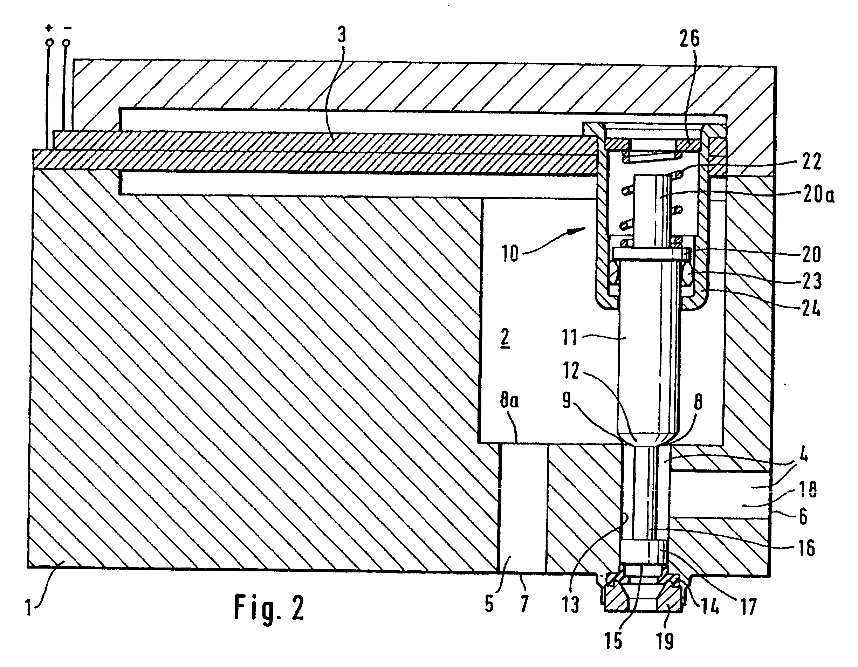

Weitere Einzelheiten der Erfindung werden anhand der in den Figuren 1 und 2 dargestellten Ausführungsbeispiele näher erläutert.
- Figur 1: zeigt eine Ausführungsform der Erfindung im Schnitt, bei der das spannungslose Fluidventil geschlossen ist,
- Figur 2: zeigt eine Ausführungsform der Erfindung im Schnitt, bei der das spannungslose Fluidventil geöffnet ist.

Bei dem Fluidventil gemäß Figur 1 ist ein Biegewandler 3 endseitig zwischen den das Ventilgehäuse 1 bildenden Teilen eingespannt, wobei im unteren Teil eine Ventilkammer 2 ausgebildet ist, mit einem ersten und einem zweiten Verbindungskanal 4, 5, die sich zwischen je einer äußeren Anschlußstelle 6, 7 und einer Mündung 8, 8a in die Ventilkammer 2 erstrecken. Die eine Mündung 8 bildet den Ventilsitz 9, der von einer Dichtfläche 12 des Stößels 11 verschlossen ist. Der Stößel 11 ist das zentrale Teil des Ventilgliedes 10. Er weist einen sich von der Dichtfläche 12 nach außen erstreckenden Schaft 16 auf, der mittels einer kolbenartigen Verdickung 17 in einer Durchgangsbohrung 13 des Ventilgehäuses 1 abdichtend geführt ist. In der Durchgangsbohrung 13 ist endseitig eine ringförmige, weichelastische Dichtung 14 mittels eines ringförmigen Bauteiles 19 befestigt. Die Durchgangsbohrung 13 bildet mit ihrem oberhalb der kolbenartigen Verdickung 17 liegenden Teil zusammen mit einem davon senkrecht abgehenden Kanalteil 18 den ersten Verbindungskanal 4.

An dem der Dichtfläche 12 abgewandten Ende ist am Stößel 11 ein Flansch 20 und ein zentraler Führungsstift 20a für eine Druckfeder 21 ausgebildet, die sich an der Innenwand 25 der Ventilkammer 2 abstützt und den Stößel 11 mit seiner Dichtfläche 12 gegen den Ventilsitz 9 anpreßt. Auf der anderen Seite des Flansches 20 ist ein Stellring 23 vorgesehen, der mittels radialer Spannkräfte in einer Hülse 24 festgelegt ist, die ihrerseits mit dem freibeweglichen Ende des Biegewandlers 3 verbunden ist. Bei der Montage läßt sich der Ventilhub einstellen, indem der Stellring 23 relativ zur Hülse 24 in Längsrichtung des Stößels 11 verschoben wird.

Der Biegewandler 3 besteht aus zwei miteinander verbundenen Streifen piezoelektrischen Materials und besitzt Anschlüsse für das Anlegen einer Spannungsquelle.

Wird an den Biegewandler 3 eine Gleichspannung angelegt, bewirkt das elektrische Feld eine Verkürzung der oberen Lage und eine Verlängerung der unteren Lage, so daß sich der Biegewandler 3 .. wie ein Bimetallstreifen unter Temperatureinwirkung - biegt und das nicht eingespannte Ende nach oben ausgelenkt wird. Dabei wird das Ventilglied 10 gegen die Rückstellkraft der Feder 21 mitgenommen und der Strömungsquerschnitt am Ventilsitz freigegeben. Damit kann Fluid durch den Verbindungskanal 4 in die Ventilkammer 2 und weiter durch den Verbindungskanal 5 oder in umgekehrter Richtung fließen. Wird eine Gleichspannung umgekehrter Polarität angelegt, kann die Schließkraft der Rückstellfeder 21 vergrößert und die Dichtigkeit weiter verbessert werden.

Bei geschlossenem Ventil ist die Druckdifferenz am Ventilsitz 9 gleich der Druckdifferenz an der kolbenartigen Verdickung 17 des Stößels 11, wobei die aus den Druckdifferenzen auf den Stößel 11 wirkenden Xräfte einander entgegengesetzt und gleich groß sind, wodurch sich die angestrebte Druckentlastung des Fluidventils ergibt.

Die Ausführungsform gemäß Figur 2 ist weitgehend identisch mit der Ausführungsform gemäß Figur 1. Gleiche Elemente sind mit gleichen Ziffern bezeichnet. Ein Unterschied besteht lediglich hinsichtlich der Funktion und einiger dadurch bedingter konstruktiver Einzelheiten.

Das Fluidventil gemäß Figur 2 ist in der dargestellten Ruheposition geöffnet und kann bei entsprechender Ansteuerung des Biegewandlers 3 geschlossen werden. Die Druckfeder 22 ist über einen Ring 26 in der Hülse 24 abgestützt, die ihrerseits im frei beweglichen Ende des Biegewandlers 3 befestigt ist. Auf der anderen Seite ist die Druckfeder 22 auf dem Flansch 20 des Stößels 11 abgestützt, der seinerseits auf dem Stellring 23 aufliegt, der wiederum zur Einstellung des Ventilhubes dient. Die Auslenkung des Biegewandlers 3 ist stets etwas größer als der Ventilhub, so daß bei geschlossenem Ventil die Druckfeder 22 gespannt wird und die Schließkraft zwischen Dichtfläche 12 und Ventilsitz 9 durch die Federkennlinie bestimmt wird. Letztlich kommt es aber auf die Schließkraft des Biegewandlers 3 an, dessen Stellweg stets größer sein muß als ein eingestellter Ventilhub und der über die Verschiebung des Widerlagers der Druckfeder 22 relativ zum Ventilsitz 9 für die aufgebrachte Federspannung maßgeblich ist.

Bei dem erfindungsgemäßen piezoelektrischen Fluidventil können alle dieser Ventilgattung eigenen Vorteile genutzt werden, ohne daß wegen zu geringer Schließkraft Kompromisse geschlossen werden müssen oder bestimmte Anwendungen nicht realisiert werden können. Anders als Magnetventile benötigen derartige Fluidventile keinen Anker und keinen Magnetkern. Sie sind in der Herstellung und Montage sehr eintach und erlauben daher eine kostengünstige Großserienfertigung. Sie können nicht zuletzt auch wegen der Druckentlastung in sehr kleinen Abmessungen realisiert werden und sind für Miniaturisierunganwendungen bestens geeignet. Da die Auslenkung des Biegewandlers spannungsabhängig ist, lassen sich neben digitalen Ein-Aus-Schaltvorgängen auch analoge Schaltvorgänge ausführen, beispielsweise zur Druckregelung oder Durchflußsteuerung. Die Rückstellung in den Ruhezustand kann passiv über einen parallel geschalteten Entladungswiderstand oder aktiv durch Anlegen einer Gegenspannung erfolgen. Dadurch kann die Ausschaltzeit weiter verkürzt und die Ansteuerfrequenz weiter erhöht werden.

Die am Ende der Durchgangsbohrung vorgesehene weichelastische Dichtung ist ortsfest und wird mit dem Stößel nicht mitbewegt. In der Schließstellung des Stößels erfolgt lediglich ein stärkeres Zusammenpressen der Dichtung. Demzufolge ist die notwendige Abdichtung der kolbenförmigen Verdickung des Stößels in der Durchgangsbohrung nicht mit unnötigen Reibungskräften belastet, was sich günstig auf die Auslegung der Stallkräfte auswirkt.

Der erfindungsgemäße Druckausgleich hat den weiteren Vorteil, daß mit einem bestimmten Biegewandler bei gegebenem Durchflußquerschnitt am Ventilsitz eine höhere Schließkraft realisiert werden kann oder umgekehrt bei gegebener Schließkraft ein größerer Durchflußquerschnitt.

Aufgrund seiner Eigenschaften ist das erfindungsgemäße Fluidventil hervorragend für Antiblockiersysteme (ABS) und für die Antischlupfregelung (ASR) bei Kraftfahrzeugen geeignet.

## Patentansprüche

1. Piezoelektrisch betätigtes Fluidventil mit einem Ventilgehäuse (1), in dem eine Ventilkammer (2) ausgebildet und ein mit einer Spannung beaufschlagbarer piezoelektrischer Biegewandler (3) einseitig eingespannt ist, mit einem ersten und zweiten Verbindungskanal (4, 5) zwischen je einer äußeren Anschlußstelle (6, 7) und einer Mündung (8, 8a) in die Ventilkammer (2), sowie mit einem Ventilsitz (9) an einer der Mündungen (8, 8a) und einem damit zusammenwirkenden, vom Biegewandler (3) betätigten Ventilglied (10), **dadurch gekennzeichnet, daß** das Ventilglied (10) einen Stößel (11) mit Dichtflächen (12) aufweist, dessen hinteres Ende mit dem nicht eingespannten Ende des Biegewandlers (3) verbunden ist und dessen vorderes Ende in einer sich durch die Gehäusewandung und senkrecht zum Ventilsitz (9) erstreckenden Durchgangsbohrung (13) abdichtend geführt ist, wobei die Durchgangsbohrung (13) innerhalb des Dichtungsbereichs eine Teilstrecke eines der Verbindungskanäle (4) bildet und die freie Stirnfläche (15) des Stößels (11) außerhalb des Dichtungsbereichs dem gleichen Fluiddruck ausgesetzt ist, der im anderen Verbindungskanal (5) herrscht.

2. Fluidventil nach Anspruch 1, **dadurch gekennzeichnet, daß** der Stößel (11) einen sich von der Dichtfläche (12) nach außen erstreckenden Schaft (16) aufweist, der endseitig mit einer kolbenartigen Verdickung (17) ausgestattet ist, die im wesentlichen den gleichen Durchmesser wie der Ventilsitz (9) hat und zur Führung des Stößels (11) in der sich durch die Gehäusewandung erstreckenden Durchgangsbohrung (13) dient.

3. Fluidventil nach Anspruch 2, **dadurch gekennzeichnet, daß** die Durchgangsbohrung (13) zusammen mit einem sich durch die Gehäusewandung quer dazu erstreckenden Kanalabschnitt (18) den ersten Verbindungskanal (4) bildet.

4. Fluidventil nach einem der Ansprüche 2 bis 3, **dadurch gekennzeichnet, daß** in der Durchgangsbohrung (13) endseitig eine ringförmige, weichelastische Dichtung (14) eingesetzt ist, gegen die die kolbenartige Verdickung (17) randseitig abdichtend anliegt.

5. Fluidventil nach Anspruch 4, **dadurch gekennzeichnet, daß** die Dichtung (14) mittels eines ringförmigen Bauteils (19) im Ventilgehäuse (1) befestigt ist.

6. Fluidventil nach einem der Ansprüche 1 bis 5, **dadurch gekennzeichnet, daß** das Stößel (11) einen Flansch (20) aufweist, der auf der dem Ventilsitz (9) abgewandten Seite von einer Druckfeder (21, 22) beaufschlagt wird und der auf der anderen Seite an einem Stellring (23) anliegt, der über radiale Spannkräfte in einer Hülse (24) befestigt ist, die ihrerseits mit dem nicht eingespannten Ende des Biegewandlers (3) verbunden ist.

7. Fluidventil nach Anspruch 6, **dadurch gekennzeichnet, daß** der Stellring (23) zur Einstellung des Ventilhubes bei der Montage unter Überwindung der radialen Spannkräfte relativ zur Hülse (24) in Längsrichtung des Stößels (11) verschiebbar ist.

8. Fluidventil nach einem der Ansprüche 6 bis 7, **dadurch gekennzeichnet, daß** es als stromlos geschlossenes Ventil ausgebildet ist, bei dem die Dichtfläche (12) des Stößels (11) mittels der Druckfeder (21) gegen den Ventilsitz (9) angedrückt wird.

9. Fluidventil nach Anspruch 8, **dadurch gekennzeichnet, daß** die Druckfeder (21) einerseits an einer dem Ventilsitz (9) gegenüberliegenden Wand (25) der Ventilkammer (2) und andererseits am Flansch (20) des Stößels (11) abgestützt ist.

10. Fluidventil nach einem der Ansprüche 6 bis 7, **dadurch gekennzeichnet, daß** es als stromlos geöffnetes Ventil. ausgebildet ist, bei dem die Druckfeder (22) einerseits unmittelbar oder mittelbar am Biegewandler (3) und andererseits am Flansch (20) des Stößels (11) abgestützt ist.

11. Verwendung eines Fluidventils nach einem der Ansprüche 1 bis 10 in einem Antiblockiersystem (ABS) bzw. bei der Antischlupfregelung (ASR) in einem Kraftfahrzeug.

12. Verwendung eines Fluidventils nach einem der Ansprüche 1 bis 10 als proportional wirkendes Druckbegrenzungsventil bzw. als proportional wirkendes Durchlaßventil.

13. Verfahren zum Betreiben eines Fluidventils nach einem der Ansprüche 1 bis 10, **dadurch gekennzeichnet, daß** zur Rückstellung des Biegewandler (3) aus der Auslenkposition in die Ruheposition eine Gegenspannung angelegt wird.

14. Fluidventil nach Anspruch 4, jedoch mit der Maßgabe, daß anstelle einer weichelastischen Dichtung (14) eine Teflondichtung mit Druckfeder verwendet wird.

## Claims

1. Piezoelectrically operated fluid valve with a valve housing (1) wherein a valve chamber (2) is designed and a piezoelectric bending transducer (3) which can be acted upon by a voltage is clamped in on one side, with a first and a second connecting channel (4, 5) between each one outer connecting point (6, 7) and a port (8, 8a) into the valve chamber (2), as well as with a valve seat (9) at one of the ports (8, 8a) and a valve member (10) cooperating therewith and operated by the bending transducer (3),
**characterized in that** the valve member (10) includes a tappet (11) with sealing surfaces (12) and having a rear end that is connected to the end of the bending transducer (3) that is not clamped in and a front end which is sealingly guided in a through-bore (13) that extends through the housing wall vertically relative to the valve seat (9), wherein the through-bore (13) within the sealing area forms a section of one of the connecting channels (4) and the free end surface (15) of the tappet (11) outside the sealing area is exposed to the same fluid pressure which prevails in the other connecting channel (5).

2. Fluid valve as claimed in claim 1,
**characterized in that** the tappet (11) includes a stem (16) which extends from the sealing surface (12) in an outward direction, the step having at its end a piston-type thickened portion (17) which generally has the same diameter as the valve seat (9) and serves to guide the tappet (11) in the through-bore (13) that extends through the housing wall.

3. Fluid valve as claimed in claim 2,
**characterized in that** the through-bore (13) forms the first connecting channel (4) together with a channel portion (18) that extends transversely thereto through the housing wall.

4. Fluid valve as claimed in any one of claims 2 to 3,
**characterized in that** an annular, soft-elastic seal (14) is inserted at the end into the through-bore (13), with the piston-type thickened portion (17) being edgewise in sealing abutment with the seal.

5. Fluid valve as claimed in claim 4,
**characterized in that** the seal (14) is attached in the valve housing (1) by means of an annular component (19).

6. Fluid valve as claimed in any one of claims 1 to 5,
**characterized in that** the tappet (11) includes a flange (20) which is acted upon by a compression spring (21, 22) on the side remote from the valve seat (9) and, on the other side, bears against an adjusting ring (23) that is attached by radial tensioning forces in a sleeve (24) which, in turn, is connected to the end of the bending transducer (3) that is not clamped in.

7. Fluid valve as claimed in claim 6,
**characterized in that** the adjusting ring (23) for the adjustment of the valve stroke during the assembly, is slidable in relation to the sleeve (24) in the longitudinal direction of the tappet (11) by overcoming the radial tensioning forces.

8. Fluid valve as claimed in any one of claims 6 to 7,
**characterized in that** the valve is configured as a normally closed valve wherein the sealing surface (12) of the tappet (11) is pressed against the valve seat (9) by means of the compression spring (21).

9. Fluid valve as claimed in claim 8,
**characterized in that** the compression spring (21) is supported on a wall (25) of the valve chamber (2) opposite to the valve seat (9), on the one hand, and on the flange (20) of the tappet (11), on the other hand.

10. Fluid valve as claimed in any one of claims 6 to 7,
**characterized in that** the valve is configured as a normally open valve, wherein the compression spring (22) is supported directly or indirectly on the bending transducer (3), on the one hand, and on the flange (20) of the tappet (11), on the other hand.

11. Use of a fluid valve as claimed in any one of claims 1 to 10 in an anti-lock system (ABS) or in the traction slip control system (TCS) in an automotive vehicle.

12. Use of a fluid valve as claimed in any one of claims 1 to 10 as a proportionally acting pressure-limiting valve or as a proportionally acting gate valve.

13. Method of operating a fluid valve as claimed in any one of claims 1 to 10,
**characterized in that** a countervoltage is applied for resetting the bending transducer (3) from the position of articulation into the rest position.

14. Fluid valve as claimed in claim 4, however, under the proviso that a teflon seal with a compression spring is used instead of a soft-elastic seal (14).

## Revendications

1. Valve à fluide à actionnement piézoélectrique, comprenant un boitier de valve (1), dans lequel une chambre de valve (2) est réalisée et un convertisseur piézoélectrique à flexion (3), auquel une tension peut être appliquée, est serré d'un côté, un premier et un second conduits de liaison (4, 5), disposés chacun entre un emplacement de raccordement extérieur (6, 7) respectif et un débouché (8, 8a) respectif dans la chambre de valve (2), un siège de valve (9), situé à l'endroit de l'un des débouchés (8, 8a), et, coopérant avec ce siège de valve, un obturateur de valve (10) actionné par le convertisseur à flexion (3), **caractérisée en ce que** l'obturateur de valve (10) comprend un poussoir (11), comportant des surfaces d'étanchéité (12), dont l'extrémité arrière est reliée à l'extrémité non serrée du convertisseur à flexion (3) et dont l'extrémité avant est guidée d'une manière étanche dans un alésage traversant (13) s'étendant à travers la paroi de boîtier et perpendiculairement au siège de valve (9), tandis que l'alésage traversant (13) constitue, dans la zone d'étanchéité, un segment partiel de l'un des conduits dé liaison (4) et que la surface frontale libre (15) du poussoir (11) est soumise, en dehors de la zone d'étanchéité, à la même pression de fluide que celle qui règne dans l'autre conduit de liaison (5).

2. Valve à fluide suivant la revendication 1, **caractérisée en ce que** le poussoir (11) comprend une tige (16) s'étendant vers l'extérieur à partir de la surface d'étanchéité (12) et pourvue, du côté de l'extrémité, d'une partie plus épaisse (17) en forme de piston qui a sensiblement le même diamètre que le siège de valve (9) et sert au guidage du poussoir (11) dans l'alésage traversant (13) s'étendant à travers la paroi de boîtier.

3. Valve à fluide suivant la revendication 2, **caractérisée en ce que** l'alésage traversant (13) constitue, en commun avec un segment de conduit (18) s'étendant à travers la paroi de boîtier transversalement à cet alésage, le premier conduit de liaison (4).

4. Valve à fluide suivant l'une des revendications 2 à 3, **caractérisée en ce qu'**il est prévu, montée dans l'alésage traversant (13) et du côté de l'extrémité, une garniture d'étanchéité (14) en forme d'anneau et à élasticité souple en appui sur laquelle la partie plus épaisse (17) en forme de piston s'applique d'une manière étanche par son bord.

5. Valve à fluide suivant la revendication 4, **caractérisée en ce que** la garniture d'étanchéité (14) est fixée dans le boîtier de valve (1) au moyen d'une pièce (19) en forme d'anneau.

6. Valve à fluide suivant l'une des revendications 1 à 5, **caractérisée en ce que** le poussoir (11) comporte une collerette (20) qui, du côté tourné à l'opposé du siège de valve (9), est soumise à l'action d'un ressort de compression (21, 22) et qui, de l'autre côté, est appliquée sur une bague de réglage (23) qui est fixée, du fait de forces radiales de serrage, dans un manchon (24) qui est lui-même relié à l'extrémité non serrée du convertisseur à flexion (3).

7. Valve à fluide suivant la revendication 6, **caractérisée en ce que**, pour le réglage de la course de valve, il est possible, lors du montage, de faire coulisser la bague de réglage (23) suivant la direction longitudinale du poussoir (11) en vainquant les forces radiales de serrage vis-à-vis du manchon (24).

8. Valve à fluide suivant l'une des revendications 6 à 7, **caractérisée en ce qu'**elle est réalisée sous forme d'une valve fermée en l'absence de courant, dans laquelle la surface d'étanchéité (12) du poussoir (11) est appliquée sous pression en appui sur le siège de valve (9) au moyen du ressort de compression (21).

9. Valve à fluide suivant la revendication 8, **caractérisée en ce que** le ressort de compression (21) est en appui d'une part sur une paroi (25) de la chambre de valve (2) qui est située à l'opposé du siège de valve (9) et d'autre part sur la collerette (20) du poussoir (11).

10. Valve à fluide suivant l'une des revendications 6 à 7, **caractérisée en ce qu'**elle est réalisée sous forme d'une valve ouverte en l'absence de courant, dans laquelle le ressort de compression (22) est en appui d'une part directement ou indirectement sur le convertisseur à flexion (3) et d'autre part sur la collerette (20) du poussoir (11).

11. Utilisation d'une valve à fluide suivant l'une des revendications 1 à 10, dans un dispositif antiblocage (ABS) ou dans la régulation anti-glissement (ASR) dans un véhicule automobile.

12. Utilisation d'une valve à fluide suivant l'une des revendications 1 à 10 en tant que valve de limitation de pression à action proportionnelle ou en tant que valve d'ouverture/fermeture de passage à action proportionnelle.

13. Procédé de mise en oeuvre d'une valve à fluide suivant l'une des revendications 1 à 10, **caractérisé en ce qu'**une tension opposée est appliquée pour le rappel du convertisseur à flexion (3) de la position fléchie vers la position de repos.

14. Valve à fluide suivant la revendication 4, comprenant toutefois la disposition consistant à utiliser une garniture d'étanchéité en Téflon comportant un ressort de compression à la place d'une garniture d'étanchéité (14) à élasticité souple.
